# DEMANDE DE BREVET EUROPEEN

(11) **EP 4 170 623 A1**
(43) Date de publication de la demande: **26.04.2023**
(21) Numéro de dépôt: 22202664.3
(22) Date de dépôt: 20.10.2022
(51) Int. Cl.: G08G 1/01, G08G 1/04

(54) **INSTALLATION DE SURVEILLANCE D'UNE ROUTE À UNITÉS ALTERNÉES ET PROCÉDÉ ASSOCIÉ**

(30) Priorité: 20.10.2021 FR 2111133
(71) Demandeur: ALSTOM Holdings, 93400 Saint-Ouen-sur-Seine (FR)
(72) Inventeur: POISSON, Pascal, 92330 SCEAUX (FR); BONNEVAY, Vincent, 69008 LYON (FR); CARAMBIA, Benedetto, 50127 FIRENZE (IT); DEL-CHIARO, Andrea, 50133 FLORENCE (IT); MALAGUTTI, Antonio, 40026 IMOLA (IT); MALESCI, Andrea, I-50127 FIRENZE (IT)
(74) Mandataire: Lavoix

(57) **Abrégé**

L'invention concerne une installation de surveillance (12) d'une circulation d'une route (10), comprenant une pluralité d'unités de surveillance (18), chaque unité de surveillance (18) étant fixée en hauteur, chaque unité de surveillance (18) comprenant au moins un capteur de détection de trafic de la route (10).

Les unités de surveillance (18) sont placées le long de la route (10) alternativement d'un premier côté (14) et d'un deuxième côté (16) de la route (10).

L'invention concerne en outre un procédé associé de surveillance d'une circulation d'une route.

## Description

La présente invention concerne une installation de surveillance d'une circulation d'une route, comprenant une pluralité d'unités de surveillance, chaque unité de surveillance étant fixée en hauteur, chaque unité de surveillance comprenant au moins un capteur de détection de trafic de la route.

La présente invention concerne en outre le procédé associé.

Le document EP 1 772 836 A1 décrit un système de gestion et d'assistance pour la gestion de la circulation routière comprenant un réseau et des unités multifonctionnelles installées en série le long d'une route.

Les unités multifonctionnelles comprennent des moyens de détection de la circulation de véhicule.

Cependant, dans une telle configuration, lorsqu'une voiture roule à côté d'un camion sensiblement à la même vitesse, le camion étant placée entre la voiture et la rangée d'unités multifonctionnelles, le camion cache la voiture, de sorte que la détection faite n'est pas représentative de la circulation réelle.

Un objet de l'invention est donc d'améliorer la fiabilité de la détection d'une installation de surveillance d'une route.

A cet effet, l'invention a pour objet une installation du type précité, dans lequel les unités de surveillance sont placées le long de la route alternativement d'un premier côté et d'un deuxième côté de la route.

L'agencement en alternance des unités de surveillance permet de réduire le risque qu'un véhicule cache un autre véhicule, dans la mesure où le côté depuis lequel est réalisée la surveillance varie, et donc d'améliorer la fiabilité de la détection.

L'installation peut en outre présenter une ou plusieurs des caractéristiques ci-dessous, considérées individuellement ou selon toutes les combinaisons techniquement possibles :
- l'au moins un capteur de détection de trafic comprend au moins une caméra et/ou au moins un capteur lidar et/ou au moins un capteur radar ;
- les unités de surveillance sont agencées telles que l'au moins un capteur de détection de trafic de l'ensemble des unités de surveillance couvrent l'ensemble de la route ;
- les unités de surveillance sont placées le long de la route à un intervalle régulier selon la direction de la route avec une tolérance dépendant de la topologie de la route ;
- l'au moins un capteur de détection de trafic de chaque unité de surveillance comprend au moins une caméra dite zoom, l'intervalle régulier étant adapté pour que chaque unité de surveillance soit agencée à la limite de résolution de la ou d'une caméra zoom de la ou chaque unité de surveillance adjacente surveillant en direction de ladite unité de surveillance ;
- l'intervalle régulier est tel chaque emplacement de la route est dans le champ de vision d'au moins un capteur de détection de trafic d'au moins deux des unités de surveillance ;
- chaque unité de surveillance comprend au moins un ensemble adapté pour surveiller la route depuis l'unité de surveillance dans un sens de la route, le ou chaque ensemble comprenant au moins deux caméras différentes ;
- l'au moins deux caméras différentes de l'au moins un ensemble comprend une caméra dite grand angle et une caméra dite zoom, la caméra dite grand angle présentant une distance focale comprise entre 10 mm et 13 mm, la caméra dite zoom présentant une distance focale comprise entre 25 mm et 45 mm ;
- chaque unité de surveillance comprend un premier ensemble adapté pour surveiller la route dans un premier sens de la route et un deuxième ensemble adapté pour surveiller la route dans un deuxième sens de la route opposé au premier sens ; et/ou
- chaque unité de surveillance comprend au moins une caméra couleur et au moins une caméra thermique.

L'invention concerne en outre un procédé de surveillance d'une circulation sur une route, comprenant la mise en place d'une installation de surveillance comprenant une pluralité d'unités de surveillance, chaque unité de surveillance étant fixée en hauteur, chaque unité de surveillance comprenant au moins un capteur de détection de trafic, les unités de surveillance étant placées le long de la route alternativement d'un premier côté et d'un deuxième côté de la route.

D'autres caractéristiques et avantages de l'invention apparaîtront à la lecture de la description qui suit de modes de réalisation de l'invention, donnée à titre d'exemple uniquement et en référence aux dessins dans lesquels :
- la figure 1 est une vue schématique de haut d'une route équipée d'une installation selon un mode de réalisation de l'invention, et
- la figure 2 est une vue représentative d'une unité de surveillance de l'installation de la figure 1.

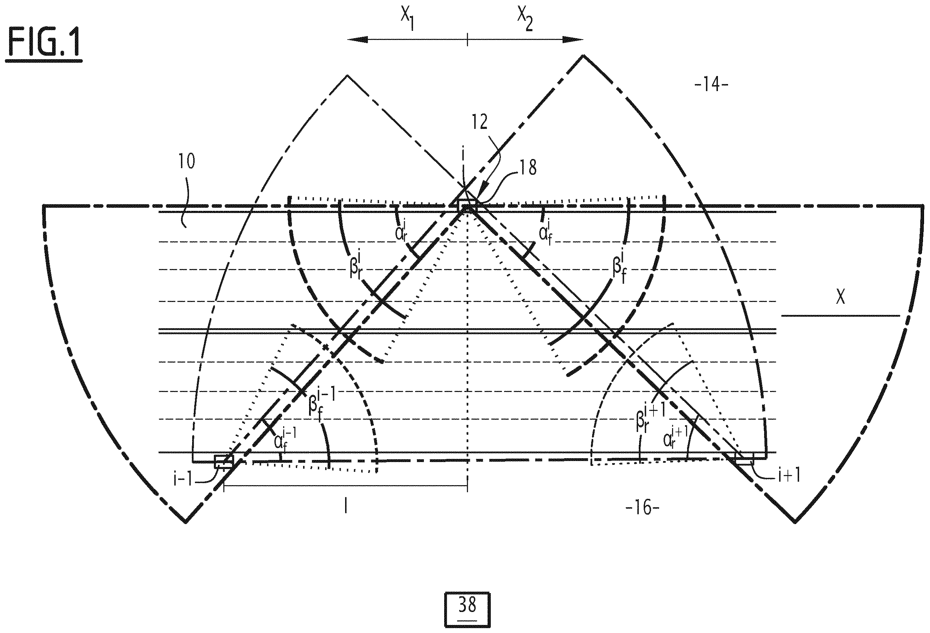

Une portion de route 10 équipée d'une installation de surveillance 12 d'une circulation selon un mode de réalisation de l'invention est représentée sur la figure 1. Ladite figure 1 ne montre qu'une portion de l'installation, qui se répète le long de la direction de la route X.

La route 10 s'étend dans une direction, la direction présentant deux sens X1, X2 correspondant aux deux sens de circulation dans le cas d'une route à double sens ou au sens de circulation et au sens opposé dans le cas d'une route à sens unique de circulation.

La route 10 définit un premier côté 14 et un deuxième côté 16.

L'installation de surveillance 12 comprend une pluralité d'unités de surveillance 18.

Les unités de surveillance 18 sont placées le long de la route, plus particulièrement à un intervalle régulier I selon la direction de la route X avec une tolérance dépendant de la topologie de la route.

La tolérance est, par exemple, de 5% dans le cas d'une route droite.

La tolérance est, par exemple, supérieure pour une route présentant une courbe ou une forte déclivité. Cela permet notamment d'avoir un recouvrement plus important.

L'intervalle régulier I est, par exemple, compris entre 100 m et 200 m.

Les unités de surveillance 18 sont agencées à proximité du bord de la route.

La distance entre les unités de surveillance et le bord de la route dépend des normes applicables au lieu, notamment au pays, de l'installation de surveillance.

La distance est, par exemple, comprise entre 50 cm et 3,0 m du bord de la route.

Les unités de surveillance 18 sont placées alternativement du premier côté 14 et du deuxième côté 16 de la route.

Ainsi, chaque unité de surveillance 18, ici de rang numéroté i, en dehors d'une éventuelle première et/ou dernière unité de surveillance de l'installation, présente deux unités de surveillance dites adjacentes, de rang numérotés i-1 et i+1, à ladite unité de surveillance.

Les unités de surveillance adjacentes i-1 et i+1 sont agencées du côté de la route opposé par rapport au côté de ladite unité de surveillance i. La distance selon la direction de la route X entre ladite unité de surveillance i et chaque unité de surveillance adjacente i-1 et i+1 est égale à l'intervalle régulier I à la tolérance près.

Les unités de surveillance i-1 et i+1 adjacentes d'une même unité de surveillance i sont agencées d'un même côté de la route 10 entre elles. Elles sont sensiblement alignées selon la direction de la route X.

Les unités de surveillance i-1 et i+1 adjacentes d'une même unité de surveillance i sont espacées de deux fois l'intervalle régulier I à la tolérance près.

Chaque unité de surveillance 18 est fixée en hauteur par rapport à la route, plus particulièrement agencée en haut d'un poteau 20. Chaque unité de surveillance est, par exemple, à une hauteur par rapport à la route comprise entre 5 m et 15 m.

Chaque unité de surveillance 18 comprend au moins un capteur de détection de trafic.

L'ensemble des au moins un capteur de détection de trafic de l'ensemble des unités de surveillance 18 couvre ici l'ensemble de la route 10.

Plus particulièrement, les champs de vision des au moins un capteur de détection de trafic de chaque unité de surveillance 18 couvre l'ensemble de la route 10.

Cela permet notamment d'avoir des informations sur l'ensemble de la route. Ces informations sont notamment utiles pour la surveillance de la route pour un observateur extérieur, par exemple une société responsable de la gestion de la route et/ou d'éventuels accidents, mais également pour les véhicules et/ou les conducteurs, qui sont susceptibles d'adapter leur conduite en fonction de ces informations ou d'anticiper un événement futur. Dans le cas d'une voiture en délégation de conduite, cela peut notamment permettre une meilleure adaptabilité de la conduite de la voiture à son environnement.

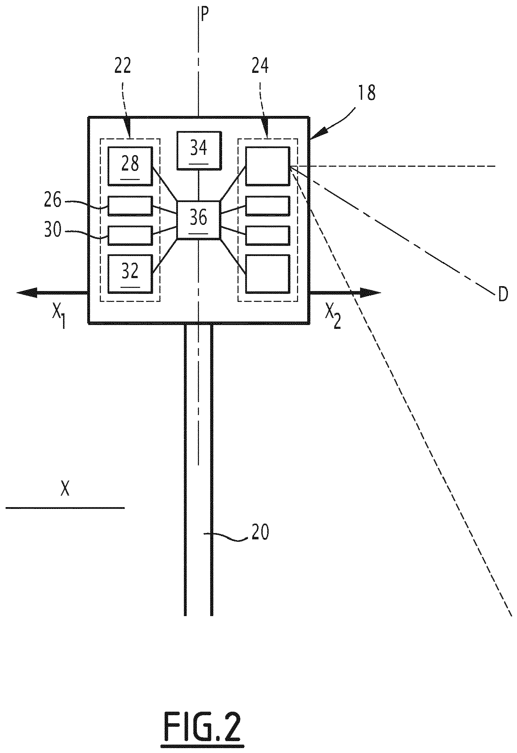

Un exemple d'unité de surveillance selon un mode de réalisation de l'invention est représenté schématiquement sur la figure 2.

Les unités de surveillance 18 sont, par exemple, identiques entre elles.

Dans l'exemple représenté, chaque unité de surveillance 18 comprend un premier ensemble 22 et un deuxième ensemble 24. Le premier ensemble 22 est adapté pour surveiller la route depuis l'unité de surveillance 18 dans un premier sens X1 des sens de la route. Le deuxième ensemble 24 est adapté pour surveiller la route depuis l'unité de surveillance dans le deuxième X2 des sens de la route.

Le premier sens X1 et le deuxième sens X2 sont opposés.

Le premier ensemble 22 comprend au moins un moyen de détection, ici au moins deux moyens de détection différentes.

Le champ de vision de chaque moyen de détection est tel qu'avec le positionnement des poteaux 20 le long de la route et la hauteur de chaque moyen de détection, la couverture de la route est complète.

Le ou les moyens de détection sont, par exemple, des caméras.

Additionnellement ou alternativement, le ou les moyens de détection comprend au moins un capteur radar et/ou au moins un capteur lidar.

La ou chaque caméra présente un axe optique D respectif.

L'axe optique est agencé de sorte à minimiser les zones d'ombres créées par les véhicules.

Le premier ensemble 22 comprend, par exemple, au moins une caméra couleur et au moins une caméra thermique.

Le premier ensemble 22 comprend, par exemple, deux caméras présentant une distance focale différente entre elles, plus particulièrement une caméra dite grand angle et une caméra dite zoom.

Le rapport de la distance focale de la caméra zoom sur la distance focale de la caméra dite grand angle est supérieur ou égal à 2.

La caméra grand angle présente une distance focale comprise entre 10 mm et 13 mm, plus particulièrement égale à 13 mm.

La distance focale de la caméra grand angle est telle que la caméra grand angle couvre une zone allant de l'unité de surveillance donnée à l'unité de surveillance suivante opposée, dans l'exemple représenté.

La caméra grand angle présente un angle de vue horizontal βᵣⁱ.

La caméra zoom présente une distance focale comprise entre 25 mm et 45 mm, plus particulièrement égale à 35 mm.

La distance focale de la caméra zoom est telle que la caméra zoom couvre une zone allant de la mi-distance entre deux unités de surveillance consécutives opposées et l'unité de surveillance adjacente.

La caméra zoom présente un angle de vue horizontal αᵣⁱ.

La caméra zoom présente une résolution telle que l'installation, par exemple le dispositif central de traitement mentionnée ensuite, soit capable de discriminer une zone compatible avec la performance attendue, par exemple, supérieure ou égale à 20 pixels par mètre.

L'intervalle régulier I est choisi tel que l'union des champs des caméras des unités de surveillance couvre la route.

L'intervalle régulier I est choisi notamment en fonction du nombre de capteurs de détection, leurs champs de vision et leurs résolutions.

Ici, l'intervalle régulier I est adapté pour que chaque unité de surveillance soit agencée à la limite de résolution d'un capteur de détection, ici de la ou d'une caméra zoom, de la ou chaque unité de surveillance adjacente surveillant dans ce sens, c'est-à-dire en direction de ladite unité de surveillance. Dans l'exemple représenté, l'unité de surveillance i est agencé à la limite de résolution de la caméra zoom orientée dans le sens X2 de l'unité de surveillance i-1 et à la limite de résolution de la caméra zoom orientée dans le sens X1 de l'unité de surveillance i+1.

L'intervalle régulier I est tel qu'il existe un niveau de redondance de détection sur chaque intervalle par plusieurs moyens de détection.

L'intervalle régulier I est tel que chaque emplacement de la route 10 est dans le champ de vision d'au moins un capteur de détection de trafic 26, 28, 30, 32 d'au moins deux des unités de surveillance 18, ici dans le champ de vision d'au moins une caméra zoom d'au moins deux des unités de surveillance.

Dans l'exemple représenté, le premier ensemble 22 comprend deux caméras couleurs 26, 28, plus particulièrement une caméra couleur grand angle 26 et une caméra couleur zoom 28, et deux caméras thermiques 30, 32, plus particulièrement une caméra thermique grand angle 30 et une caméra couleur zoom 32, présentant une distance focale différente entre elles.

La caméra couleur grand angle 26 et la caméra thermique grand angle 30 ont sensiblement le même champ de vision.

La caméra couleur zoom 28 et la caméra thermique zoom 32 ont sensiblement le même champ de vision.

Les caméras couleur présentent une résolution plus importante que la résolution des caméras thermiques.

Cela permet d'obtenir un nombre de pixels par mètre minimum pour chaque caméra.

Les caméras couleurs 26, 28 et les caméras thermiques 30, 32 sont utilisées conjointement, de manière à détecter efficacement des situations de visibilité diverses.

Le deuxième ensemble 24 comprend les mêmes éléments, plus particulièrement ici les mêmes caméras, que le premier ensemble 22.

Le deuxième ensemble 24 est, par exemple, l'image du premier ensemble 22 par réflexion selon un plan médian P perpendiculaire à la direction de la route X.

Dans l'exemple représenté, chaque unité de surveillance 18 comprend, par exemple, un module de communication 34 et, ici en outre, un module central 36.

Le module de communication 34 est adapté pour transmettre des données depuis l'unité de surveillance 18 par un réseau de communication.

Le module de communication comprend, par exemple, un émetteur, plus particulièrement une antenne.

Alternativement, le module de communication 34 est adapté pour transmettre des données par un réseau filaire.

Le module central 36 est adapté pour recevoir les données de l'au moins un capteur de détection, ici de l'ensemble des caméras, et pour transmettre ces données au module de communication pour émission.

L'installation de surveillance 12 comprend en outre au moins un dispositif central de traitement 38.

Les modules de communication 34 des unités de surveillance 18 sont chacun adaptés pour communiquer avec au moins un de l'au moins un dispositif central de traitement 38.

Ainsi, l'installation de surveillance permet une surveillance complète de la route, grâce à l'ensemble des unités de surveillance et à leur couverture de l'ensemble de la route.

Un exemple d'unité de surveillance a été décrit. Néanmoins, les unités de surveillance d'une installation de surveillance selon l'invention sont susceptibles de différer de l'exemple décrit, par exemple selon les variantes mentionnées ci-dessous.

Alternativement, les unités de surveillance ne comprennent pas de caméras thermiques.

Alternativement, le ou chaque ensemble de l'unité de surveillance comprend une unique caméra.

Alternativement, les caméras du ou de chaque ensemble de l'unité de surveillance présentent une distance focale sensiblement égale entre les caméras.

Additionnellement ou alternativement, l'au moins un capteur de détection de trafic de chaque unité de surveillance comprend au moins un capteur lidar et/ou au moins un capteur radar.

Dans un mode de réalisation alternatif non représenté, chaque unité de surveillance comprend un unique ensemble adapté pour surveiller la route depuis l'unité de surveillance dans un sens de la route. Tous les ensembles des unités de surveillance sont, par exemple, agencés pour surveiller la route dans le même sens de la route.

L'installation de surveillance a été représentée sur la figure 1 par rapport à une route droite. Cependant, l'invention est également applicable à une route courbe, la direction de la route X correspondant alors, par exemple, la courbe médiane des deux bords de la route.

Un procédé de surveillance d'une route 10 va maintenant être décrit en regard de l'invention.

Le procédé comprend une étape de mise en place d'une installation de surveillance 12 telle que décrite précédemment, les unités de surveillance 18 étant placées le long de la route 10 alternativement d'un premier côté 14 et d'un deuxième côté 16 de la route 10.

Chaque unité de surveillance 18 surveille une portion de la route 10 grâce à l'au moins un capteur de détection de trafic 26, 28, 30, 32.

Les données acquises par l'au moins un capteur de détection de trafic 26, 28, 30, 32 sont, par exemple, transmises au dispositif central de traitement 38 via le module de communication 34.

Cela permet de récupérer les données acquises, par exemple, pour les traiter informatiquement pour en déduire la présence de différents véhicules, leur vitesse et/ou leur accélération respectives, la densité des véhicules et éventuellement la présence éventuelle d'un accident et/ou d'obstacles.

Additionnellement ou alternativement, cela permet d'afficher les données acquises pour une surveillance visuelle.

L'agencement des unités de surveillance alternativement de chaque côté de la route permet d'observer la route selon des points de vue différents.

En particulier, dans le cas d'un camion circulant sur la voie de droite avec une voiture circulant sur la voie à sa gauche selon le sens de circulation, la voiture risquerait d'être cachée par le camion dans le cas d'une unité de surveillance sur le bord de la route à droite, alors qu'elle ne l'est pas dans le cas d'une unité de surveillance sur le bord de la route à gauche.

Ainsi, l'installation de surveillance selon l'invention permet d'améliorer la fiabilité des informations obtenues par les unités de surveillance, et donc de la surveillance de la route.

## Revendications

1. Installation de surveillance (12) d'une circulation d'une route (10), comprenant une pluralité d'unités de surveillance (18), chaque unité de surveillance (18) étant fixée en hauteur, chaque unité de surveillance (18) comprenant au moins un capteur de détection de trafic (26, 28, 30, 32) de la route (10), **caractérisé en ce que** les unités de surveillance (18) sont agencées telles que l'au moins un capteur de détection de trafic (26, 28, 30, 32) de l'ensemble des unités de surveillance (18) couvrent l'ensemble de la route (10), et placées le long de la route (10) alternativement d'un premier côté (14) et d'un deuxième côté (16) de la route (10) et à un intervalle régulier (I) selon la direction de la route (X) avec une tolérance dépendant de la topologie de la route, l'intervalle régulier (I) étant tel chaque emplacement de la route (10) est dans le champ de vision d'au moins un capteur de détection de trafic (26, 28, 30, 32) d'au moins deux des unités de surveillance (18).

2. Installation de surveillance selon la revendication 1, dans laquelle l'au moins un capteur de détection de trafic (26, 28, 30, 32) comprend au moins une caméra (26, 28, 30, 32) et/ou au moins un capteur lidar et/ou au moins un capteur radar.

3. Installation de surveillance selon la revendication 1 ou 2, dans laquelle l'au moins un capteur de détection de trafic (26, 28, 30, 32) de chaque unité de surveillance (18) comprend au moins une caméra dite zoom (28, 32), l'intervalle régulier (I) étant adapté pour que chaque unité de surveillance (18) soit agencée à la limite de résolution de la ou d'une caméra zoom (28, 32) de la ou chaque unité de surveillance adjacente surveillant en direction de ladite unité de surveillance (18).

4. Installation de surveillance selon l'une quelconque des revendications 1 à 3, dans laquelle chaque unité de surveillance (18) comprend au moins un ensemble (22, 24) adapté pour surveiller la route (10) depuis l'unité de surveillance (18) dans un sens (X1, X2) de la route (10), le ou chaque ensemble (20, 22) comprenant au moins deux caméras différentes (26, 28, 30, 32).

5. Installation de surveillance selon la revendication 4, dans laquelle l'au moins deux caméras différentes (26, 28, 30, 32) de l'au moins un ensemble (22, 24) comprend une caméra dite grand angle (26, 30) et une caméra dite zoom (28, 32), la caméra dite grand angle (26, 30) présentant une distance focale comprise entre 10 mm et 13 mm, la caméra dite zoom (28, 32) présentant une distance focale comprise entre 25 mm et 45 mm.

6. Installation de surveillance selon l'une quelconque des revendications 1 à 5, dans laquelle chaque unité de surveillance (18) comprend un premier ensemble (22) adapté pour surveiller la route (10) dans un premier sens (X1) de la route et un deuxième ensemble (24) adapté pour surveiller la route (10) dans un deuxième sens (X2) de la route opposé au premier sens (X1).

7. Installation de surveillance selon l'une quelconque des revendications 1 à 6, dans laquelle chaque unité de surveillance (18) comprend au moins une caméra couleur (26, 28) et au moins une caméra thermique (30, 32).

8. Procédé de surveillance d'une circulation sur une route (10), comprenant la mise en place d'une installation de surveillance (12) comprenant une pluralité d'unités de surveillance (18), chaque unité de surveillance (18) étant fixée en hauteur, chaque unité de surveillance (18) comprenant au moins un capteur de détection de trafic (26, 28, 30, 32), les unités de surveillance (18) étant agencées telles que l'au moins un capteur de détection de trafic (26, 28, 30, 32) de l'ensemble des unités de surveillance (18) couvrent l'ensemble de la route (10), et placées le long de la route (10) alternativement d'un premier côté (14) et d'un deuxième côté (16) de la route (10) et à un intervalle régulier (I) selon la direction de la route (X) avec une tolérance dépendant de la topologie de la route, l'intervalle régulier (I) étant tel chaque emplacement de la route (10) est dans le champ de vision d'au moins un capteur de détection de trafic (26, 28, 30, 32) d'au moins deux des unités de surveillance (18).
